# EUROPEAN PATENT SPECIFICATION

(11) **EP 1 505 088 B1**
(45) Date of publication and mention of the grant of the patent: **31.10.2007**
(21) Application number: 04254276.1
(22) Date of filing: 16.07.2004
(51) Int. Cl.: C08F 20/12, C09D 133/06

(54) **Aqueous multistage emulsion polymer composition**
Wässrige Mehrstufen-Emulsionspolymerzusammensetzung
Emulsion de composition aqueuse d'un polymère à couches multiples.

(30) Priority: 29.07.2003 US 490744 P
(43) Date of publication of application: 09.02.2005
(73) Proprietor: ROHM AND HAAS COMPANY, Philadelphia, Pennsylvania 19106-2399 (US)
(72) Inventor: Lauer, Rosemarie Palmer, Chalfont Pennsylvania 18914 (US); Petoff, Jennifer Lynn, Yardley Pennsylvania 19067 (US)
(74) Representative: Kent, Venetia Katherine

(56) References cited:
- EP-A- 1 234 838

## Description

This invention relates to an aqueous multistage emulsion polymer, an aqueous coating composition including the aqueous multistage emulsion polymer, a method for preparing the aqueous multistage emulsion polymer, and a coated substrate bearing the dry applied coating. More particularly this invention relates to aqueous multistage emulsion polymer formed by the free radical emulsion polymerization in at least two stages of, in each stage, at least one ethylenically unsaturated nonionic acrylic monomer, the polymer in two of the stages having glass transition temperatures (Tg) differing by at least 10 °C; the polymerization, in at least one stage, being effected in the presence of 0.01-1.0%%, by weight based on the dry weight of the stage polymer, t-alkyl hydroperoxide, t-alkyl peroxide, or t-alkyl perester wherein the t-alkyl group includes at least 5 Carbon atoms.

The present invention in one embodiment serves to provide an aqueous coating composition suitable for use, when dry, as a coating, "coating" herein including, for example, paint, clearcoat, topcoat, primer, paper coating, and leather coating, elastomeric coating, caulk, sealant, and pressure sensitive adhesive. Such a coating typically exhibits improvement in at least one of scrub resistance, block resistance, print resistance, tensile/elongation properties, marker stain blocking, corrosion resistance over metal, flash rust resistance over metal, gloss(higher), exterior durability as indicated, for example, by gloss retention or cracking resistance, adhesion to substrates, water vapor permeability, and water swelling, relative to a coating in which a multistage emulsion polymer of the same composition not so formed is employed or, alternatively, relative to a coating in which a single stage polymer so formed is employed.

U.S. Patent No. 6,545,084 discloses an aqueous coating composition comprising an aqueous emulsion polymer, the polymer having a glass transition temperature (Tg) from greater than 20 °C to 80 °C, formed by the free radical polymerization of at least one ethylenically unsaturated nonionic acrylic monomer and 0-7.5%, by weight based on the total weight of the polymer, ethylenically unsaturated acid monomer in the presence of 0.01-1.0 %, by weight based on the total weight of the polymer, t-alkyl hydroperoxide, t-alkyl peroxide, or t-alkyl perester wherein the t-alkyl group includes at least 5 Carbon atoms.

The problem faced by the inventors is the provision of an aqueous composition suitable for use when dry as an improved coating. Unexpectedly, the inventors found that selected multistage emulsion polymer compositions in which at least one stage is formed by a certain process confer important advantages in dry coatings properties.

In a first aspect of the present invention there is provided an aqueous multistage emulsion polymer formed by the free radical emulsion polymerization in at least two stages of, in each stage, at least one ethylenically unsaturated nonionic acrylic monomer, the polymer in two of said stages having glass transition temperatures (Tg) differing by at least 10 °C; said polymerization, in at least one stage, being effected in the presence of 0.01-1.0%%, by weight based on the dry weight of said stage polymer, t-alkyl hydroperoxide, t-alkyl peroxide, or t-alkyl perester wherein the t-alkyl group includes at least 5 Carbon atoms.

In a second aspect of the present invention there is provided an aqueous coating composition comprising the aqueous multistage emulsion polymer of the first aspect of the present invention.

In a third aspect of the present invention there is provided a method for preparing an aqueous multistage emulsion polymer comprising forming said multistage polymer by the free radical emulsion polymerization in at least two stages of, in each stage, at least one ethylenically unsaturated nonionic acrylic monomer, the polymer in two of said stages having glass transition temperatures (Tg) differing by at least 10 °C; said polymerization, in at least one stage, being effected in the presence of 0.01-1.0%%, by weight based on the dry weight of said stage polymer, t-alkyl hydroperoxide, t-alkyl peroxide, or t-alkyl perester wherein the t-alkyl group includes at least 5 Carbon atoms.

In a fourth aspect of the present invention there is provided a method for providing a coated substrate comprising: forming said aqueous coating composition of claim 3; applying said aqueous coating composition to said substrate; and drying, or allowing to dry, said aqueous composition.

This invention relates to an aqueous multistage emulsion polymer formed by the free radical emulsion polymerization in at least two stages of, in each stage, at least one ethylenically unsaturated nonionic acrylic monomer, the polymer in two of the stages having glass transition temperatures (Tg) differing by at least 10 °C; the polymerization, in at least one stage, being effected in the presence of 0.01-1.0%%, by weight based on the dry weight of the stage polymer, t-alkyl hydroperoxide, t-alkyl peroxide, or t-alkyl perester wherein the t-alkyl group includes at least 5 Carbon atoms.

The aqueous multistage emulsion polymer is formed in two or more stages which differ in polymer composition. Each stage contains at least one copolymerized ethylenically unsaturated nonionic acrylic monomer. By "nonionic monomer" herein is meant that the copolymerized monomer residue does not bear an ionic charge between pH=1-14.

The ethylenically unsaturated nonionic acrylic monomers include, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, ethyl methacrylate, isodecyl methacrylate, lauryl methacrylate, hydroxyethyl methacrylate, hydroxypropyl methacrylate, (meth)acrylonitrile, and (meth)acrylamide. Other ethylenically unsaturated nonionic monomers which may be incorporated into each stage of the polymer, independently, include, for example, styrene and substituted styrenes; butadiene; vinyl acetate, vinyl butyrate and other vinyl esters; vinyl monomers such as vinyl chloride, vinyl toluene, and vinyl benzophenone; and vinylidene chloride. Preferred are all-acrylic, styrene/acrylic, and vinyl acetate/acrylic multistage emulsion polymers, i.e., the overall composition includes those monomers or classes of monomers. Preferred is a predominantly acrylic aqueous multistage emulsion polymer. By "predominantly acrylic" herein is meant that the multistage emulsion polymer contains greater than 50%, by weight, copolymerized units deriving from nonionic (meth)acrylic monomers such as, for example, (meth)acrylate esters, (meth)acrylamides, and (meth)acrylonitrile. The use of the term "(meth)" followed by another term such as acrylate or acrylamide, as used throughout the disclosure, refers to both acrylates or acrylamides and methacrylates and methacrylamides, respectively.

Each stage of the multistage emulsion polymer, independently, may contain from 0% to 7.5%, preferably from 0% to 2.5%, by weight based on stage monomer weight, of a copolymerized monoethylenically-unsaturated acid monomer, based on the weight of the polymer, such as, for example, acrylic acid, methacrylic acid, crotonic acid, itaconic acid, fumaric acid, maleic acid, monomethyl itaconate, monomethyl fumarate, monobutyl fumarate, maleic anhydride, 2-acrylamido-2-methylpropane sulfonic acid, vinyl sulfonic acid, styrene sulfonic acid, 1-allyloxy-2-hydroxypropane sulfonic acid, alkyl allyl sulfosuccinic acid, sulfoethyl (meth)acrylate, phosphoalkyl (meth)acrylates such as phosphoethyl (meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate. In some embodiments an acid monomer and amide monomer are both used such as, for example, from 0.1 to 1.5 wt %, itaconic acid and from 0.1 to 2 wt% acrylamide, each based on the weight of stage monomer weight.

In one embodiment of this invention the aqueous multistage emulsion polymer includes, as polymerized units, from 0.1 to 10%, preferably, from 0.25% to 2.5%, by weight of a monomer of formula (i) based on the total weight of polymerized monomer units in the multistage emulsion polymer 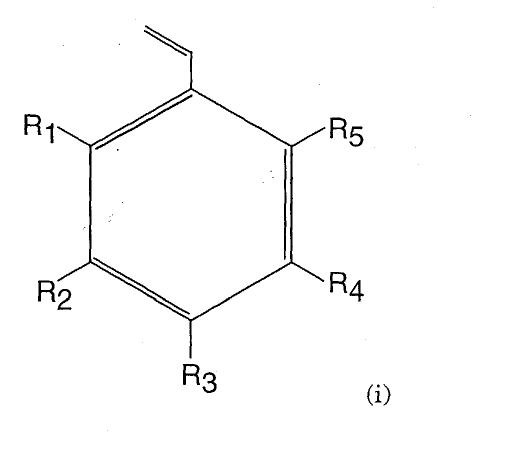 wherein R₁, R₂, R₃, R₄ and R₅ are selected from the group consisting of H and C₁-C ₄alkyl, with the proviso that at least one of R₁, R ₂, R₃, R₄ and R₅ is C₁-C ₄alkyl.

Preferred compounds of formula (i) are those wherein at least one of R ₁, R₂, R₃, R₄and R₅is C ₁-C₂alkyl. Suitable compounds of formula (i) include methylstyrene, ethylstyrene, dimethylstyrene, diethylstyrene and trimethylstyrene. The more preferred compounds of formula (i) are those wherein only one of R₁, R₂, R₃, R₄ and R₅ are methyl, and the remainder are hydrogen; such a compound is referred to herein as "methylstyrene." Methylstyrene suitable for use in the present invention may be a single isomer, or a mixture of more than one isomer. Methylstyrene is often made available as "vinyltoluene" as a mixture of isomers. The compound of formula i can be included in one or more of the copolymerized stages of the multistage emulsion polymer

Each stage of the multistage emulsion polymer, independently, may contain from 0% to 50%, by weight based on stage monomer weight, of a copolymerized ethylenically-unsaturated aldehyde reactive group-containing monomer, based on the weight of the polymer. By "aldehyde reactive group-containing monomer" is meant herein a monomer which, in a homogeneous solution containing 20% by weight of the monomer and an equimolar amount of formaldehyde at any pH from 1 to 14, will exhibit greater than 10% extent of reaction between the monomer and formaldehyde on a molar basis in one day at 25 °C. Ethylenically-unsaturated aldehyde reactive group-containing monomers are, for example, vinyl acetoacetate, acetoacetoxyethyl (meth)acrylate, acetoacetoxypropyl (meth)acrylate, allyl acetoacetate, acetoacetoxybutyl (meth)acrylate, 2,3-di(acetoacetoxy)propyl (meth)acrylate, vinyl acetoacetamide, acetoacetoxyethyl (meth)acrylamide, 3-(2-vinyloxyethylamino)-propionamide, N-(2-(meth)acryloxyethyl)-morpholinone-2, 2-methyl-1-vinyl-2-imidazoline, 2-phenyl-1-vinyl-2-imidazoline, 2-(3-Oxazolidinyl)ethyl (meth)acrylate, N-(2-vinoxyethyl)-2-methyloxazolidine, 4,4-dimethyl-2-isopropenyloxazoline, 3-(4-pyridyl)propyl (meth)acrylate, 2-methyl-5-vinyl-pyridine, 2-vinoxyethylamine, 2-vinoxyethylethylene-diamine, 3-aminopropyl vinyl ether, 2-amino-2-methylpropyl vinyl ether, 2-aminobutyl vinyl ether, tert-butylaminoethyl (meth)acrylate, 2-(meth)acryloxyethyldimethyl-β-propiobetaine, diethanolamine monovinyl ether, o-aniline vinyl thioether, (meth)acryloxyacetamidoethylethyleneurea, ethyleneureidoethyl (meth)acrylate, (meth)acrylamidoethylethyleneurea, (meth)acrylamidoethyl-ethylenethiourea, N-((meth)acrylamidoethyl)-N¹-hydroxymethylethyleneurea, N-((meth)acrylamidoethyl)-N¹-methoxymethylethyleneurea, N-formamidoethyl-N¹-vinylethyleneurea, N-vinyl-N¹-aminoethyl-ethyleneurea, N-(ethyleneureidoethyl)-4-pentenamide, N-(ethylenethioureido-ethyl)-10-undecenamide, butyl ethyleneureido-ethyl fumarate, methyl ethyleneureidoethyl fumarate, benzyl N-(ethyleneureido-ethyl) fumarate, benzyl N-(ethyleneureido-ethyl) maleamate, N-vinoxyethylethylene-urea, N-(ethyleneureidoethyl)-crotonamide, ureidopentyl vinyl ether, 2-ureidoethyl (meth)acrylate, N-2-(allylcarbamoto)aminoethyl imidazolidinone, 1-(2-((20hydroxy-3-(2-propenyloxy)propyl)amino)ethyl)-2-imidazolidinone, hydrogen ethyleneureidoethyl itaconamide, ethyleneureidoethyl hydrogen itaconate, bis-ethyleneureidoethyl itaconate, ethyleneureidoethyl undecylenate, ethyleneureidoethyl undecylenamide, 2-(3-methylolimidazolidone-2-yl-1)ethyl acrylate, N-acryloxyalkyl oxazolidines, acylamidoalkyl vinyl alkyleneureas, aldehyde-reactive amino group-containing monomers as dimethyaminoethyl methacrylate, and ethylenically unsaturated monomers containing aziridene functionality. Preferred is from 0.1% to 30%, more preferred is 0.5% to 20%, most preferred is 1% to 10%, by weight based on stage monomer weight, of a copolymerized ethylenically-unsaturated aldehyde reactive group-containing monomer, based on the weight of at least one stage of the multistage polymer.

In an alternative embodiment polymers in one or more stages containing a sufficient amount of copolymerized monomer(s) having reactive functionality, which is not reactive with aldehydes, to provide, after reaction, during or after the emulsion polymerization, copolymerized aldehyde-reactive monomer equivalent are also included. By "copolymerized monomer equivalent" is meant herein the copolymerized monomer which would have led to the copolymer even though the polymer was formed by a post-polymerization reaction rather than directly formed by the copolymerization of that monomer. In this embodiment, for example, the reaction product of polymers containing carboxylic acid functionality with compounds consisting of or containing an aziridine (ethyleneimine) ring or rings may be formed. Substitution on the ring may be on the nitrogen and /or either or both carbons such as, for example, ethyleneimine, propyleneimine, N-(2-hydroxyethyl) ethyleneimine, trimethylolpropane-tris-(β-(N-aziridinyl) propionate), and pentaerythritol trimethylolpropane-tris-(β-(N-aziridinyl) propionate). Also, polymers containing β-aminoester and/ or β-hydroxyamide functionality may be formed by post-polymerization processes.

Each stage of the multistage emulsion polymer, independently, may contain from 0% to 1%, by weight based on stage monomer weight, copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, and divinyl benzene.

In one embodiment, the aqueous multistage emulsion polymer composition includes a photosensitive moiety. The photosensitive moiety is capable of absorbing some portion of the solar light spectrum and potentially acting as a photoinitiator for crosslinking of the multistage emulsion polymer during exterior exposure. The photosensitive moiety may be a photosensitive compound added to the aqueous polymer composition before, during, or after polymerization is effected, or a photosensitive group that is chemically incorporated into one or more of the polymer stages of the multistage emulsion polymer composition, for example, by copolymerization. Examples of photosensitive compounds are benzophenone derivatives wherein one or both of the phenyl rings may be substituted such as, for example, benzophenone, 4-methyl benzophenone, 4-hydroxy benzophenone, 4-amino benzophenone, 4-chloro benzophenone, 4-hydroxycarboxyl benzophenone, 4,4'-dimethyl benzophenone, 4,4'-dichloro benzophenone, 4-carboxymethyl benzophenone, 3-nitro benzophenone, substituted phenyl ketones such as substituted phenyl acetophenones. The photosensitive groups may be present in one or more of the stages as copolymerized ethylenically unsaturated monomers that contain photosensitive groups. Examples of ethylenically unsaturated monomers that contain photosensitive groups include vinyl toluene, allyl benzoylbenxoates and monomers incorporating pendant benzophenone groups, such as vinylbenzyl methylbenzoylbenzoate, hydroxymethacryloxypropyl methylbenzoylbenzoate, hydroxymethacryloxypropyl benzoylbenzoate, and hydroxymethacryloxypropoxy benzophenone. Preferred is benzophenone. The aqueous multistagepolymer composition may contain from 0.1 to 5 weight %, preferably from 0.1 to 3 wt. %, and more preferably, 0.1 to 1 weight % of one or more photosensitive compounds, based on the total multistage polymer weight.

The glass transition temperature ("Tg") of the polymer in each stage of the multistage emulsion polymer is calculated by using the Fox equation (T.G. Fox, Bull. Am. Physics Soc., Volume 1, Issue No. 3, page 123(1956)). that is, for calculating the Tg of a copolymer of monomers M1 and M2,

1/Tg(calc.)= w(M1)/Tg(M1) + w(M2)/Tg(M2)

, wherein
Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,
all temperatures being in °K.

The glass transition temperatures of homopolymers may be found, for example, in "Polymer Handbook", edited by J. Brandrup and E.H. Immergut, Interscience Publishers. The polymers formed in two of the stages have glass transition temperatures differing by at least 10 °C. In one embodiment the aqueous multistage emulsion polymer includes from 5% to70%, preferably from 10% to 50%, and more preferably from 15% to 30% by weight, based on dry multistage polymer weight, of a first stage polymer having a Tg of from 25 °C to 125 °C, preferably from 40 °C to 90 °C; and from 30% to 95%, preferably from 50% to 90%, and more preferably from 70% to 85% by weight, based on dry multistage polymer weight, of a second stage polymer having a Tg of from -40 °C to 50 °C, preferably from -20 °C to 20 °C, with the proviso that the Tg of the first stage polymer is at least 10 °C higher than the Tg of the second stage polymer. The stages of any of the multistage emulsion polymers of the invention may be formed in any desired order, "first stage" polymer and "second stage" polymer indicating compositionally different stage and not necessarily the order of the preparation of the stages.

The polymerization techniques used to prepare aqueous emulsion polymers are well known in the art. In the polymerization of the multistage emulsion polymer of this invention each stage is prepared independently in the sense that surfactants, initiators, etc. are selected independently and may be the same or different for each stage, recognizing, however, that subsequent stages are prepared in the presence of previously prepared stage(s) and, in the absence of inter-stage treatment which is contemplated but not preferred, remaining ingredients from earlier stages may persist during the preparation of later stages. In the emulsion polymerization process conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer. Either thermal or redox initiation processes may be used. The reaction temperature is maintained at a temperature lower than 120 °C throughout the course of the reaction. Preferred is a reaction temperature between 30 °C and 95 °C, more preferably between 50 °C and 90 °C. The monomer mixture may be added neat or as an emulsion in water. The monomer mixture may be added in one or more additions or continuously, linearly or not, over the reaction period, or combinations thereof. When relatively weak acid monomers, such as acrylic or methacrylic acid, are incorporated into the composition it may desirable to add neutralizing agents or buffers during some or all of the polymerization to maintain a pH of approximately 4 to 8.

In at least one stage, preferably at least in the lowest Tg stage, of the multistage emulsion polymer formation, polymerization is effected in the presence of 0.01-1.0%, by weight based on the dry weight of the stage polymer, t-alkyl hydroperoxide, t-alkyl peroxide, or t-alkyl perester wherein the t-alkyl group includes at least 5 Carbon atoms, preferably in the presence of 0.01-1.0 %, by weight based on the dry weight of the stage polymer, of t-alkyl hydroperoxide wherein the t-alkyl group includes at least 5 Carbon atoms; and more preferably in the presence of 0.01-1.0 %, by weight based on the dry weight of the stage polymer, of t-amyl hydroperoxide. Conventional free radical initiators (oxidants) which may be used in addition in the at least one stage just described, or exclusively in other stages, include, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01% to 3.0% by weight, based on the weight of stage monomer. Redox systems using one or more oxidants with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, sodium 2-hydroxy-2-sulfinatoacetic acid, acetone bisulfite, amines such as ethanolamine, glycolic acid, glyoxylic acid hydrate, lactic acid, glyceric acid, malic acid, tartaric acid and salts of the preceding acids may be used in any stage. Redox reaction catalyzing metal salts of iron, copper, manganese, silver, platinum, vanadium, nickel, chromium, palladium, or cobalt may be used. Typical levels of catalytic metal salts used in accordance with the invention range from 0.01 ppm to 25 ppm. Mixtures of two or more catalytic metal salts may also be usefully employed. Chelating ligands which may be used when catalytic metal salts are used include multidentate aminocarboxylate ligands such as, for example, nitrilotriacetic acid (NTA, a tetradentate ligand), ethylene diamine diacetic acid (EDDA, a tetradentate ligand), N-(hydroxyethyl)ethylene diamine triacetic acid (HEDTA, a pentadentate ligand), ammonia diacetic acid (ADA, a tridentate ligand) and ethylene diamine tetraacetic acid (EDTA, a hexadentate ligand). Other suitable chelating ligands may include chelating ligands such as, for example, bidentate aminocarboxylate ligands, porphyrin ligands having one or two ancillary carboxylate ligands, nitrogen containing macrocycles having ancillary carboxylate ligands and mixtures of multidentate diamines, triamines and dicarboxylic acids. Combinations of two or more multidentate aminocarboxylate ligands may also be usefully employed.

By "in the presence of 0.01-1.0 %, by weight based on the dry weight of said polymer, t-alkyl hydroperoxide, t-alkyl peroxide, or t-alkyl perester wherein the t-alkyl group includes at least 5 Carbon atoms" is meant that the cumulative amount of t-alkyl hydroperoxide, t-alkyl peroxide, or t-alkyl perester wherein the t-alkyl group includes at least 5 Carbon atoms which has been added to the reaction zone wherein at least some of the monomers are being converted to the emulsion polymer is 0.01-1.0 %, by weight based on the dry weight of the stage polymer; optionally wherein at least 95%, preferably the last 95%, by weight of the monomers are being converted to the emulsion polymer; optionally wherein at least 75%, preferably the last 75%, by weight of the monomers are being converted to the emulsion polymer; optionally wherein at least the last 50% by weight of the monomers are being converted to the emulsion polymer; and further optionally wherein at least the last 20% by weight of the monomers are being converted to the emulsion polymer. The optional additional oxidant includes those listed hereinabove as conventional free radical initiators such as, for example, tert-butylhydroperoxide, hydrogen peroxide, ammonium persulfate, and the like. In certain embodiments of the present invention, it is advantageous to choose a mixture containing one hydrophilic initiator and the relatively hydrophobic t-alkyl hydroperoxide, t-alkyl peroxide, or t-alkyl perester wherein the t-alkyl group includes at least 5 Carbon atoms in order to increase the overall efficiency of the initiator system with regard to the initiation of the full range of hydrophilic and hydrophobic monomers; preferably the optional additional oxidant(s) are less than 50% by weight of the total amount of initiator/oxidant. In this embodiment the t-alkyl hydroperoxide, t-alkyl peroxide, or t-alkyl perester wherein the t-alkyl group includes at least 5 Carbon atoms initator(s) and optional at least one other oxidant may be used as such or as the oxidant component(s) of a redox system using the same initiator(s) coupled with at least one suitable reductant such as those listed hereinabove.

In one embodiment, after 90-99.7 %, preferably 95-99.7%, of the monomers by weight, based on the total weight of the polymer, have been converted to polymer, at least half of the remaining monomer is converted to polymer in the presence of 0.01-1.0 %, by weight based on the dry weight of the stage polymer, of t-alkyl hydroperoxide, t-alkyl peroxide, or t-alkyl perester wherein the t-alkyl group includes at least 5 Carbon atoms; preferably in the presence of 0.01-1.0 %, by weight based on the dry weight of the stage polymer, of t-alkyl hydroperoxide wherein the t-alkyl group includes at least 5 Carbon atoms; and more preferably in the presence of 0.01-1.0 %, by weight based on the dry weight of the stage polymer, of t-amyl hydroperoxide. This part of the reaction may be effected as soon as 90-99.7%, preferably 95-99.7%, conversion of the monomers to polymer is completed in the same reaction vessel or kettle. It may be effected after a period of time, in a different reaction vessel or kettle, or at a different temperature than the preceding part of the polymerization. Preferred is the presence of t-alkyl hydroperoxide, t-alkyl peroxide, or t-alkyl perester wherein the t-alkyl group includes at least 5 Carbon atoms only after 90%, more preferably only after 95%, conversion of the monomers to polymer is completed.

The t-alkyl hydroperoxide, t-alkyl peroxide, or t-alkyl perester wherein the t-alkyl group includes at least 5 Carbon atoms, optional additional oxidant(s), and optional reductant(s) may be added, for example, together or separately, in one or more shots or gradually, whether uniformly or not, or in combinations thereof or variations thereon as is desired; they may be added neat, in solution, or emulsified in an appropriate medium.

Chain transfer agents such as, for example, halogen compounds such as tetrabromomethane; allyl compounds; or mercaptans such as alkyl thioglycolates, alkyl mercaptoalkanoates, and C₄-C₂₂ linear or branched alkyl mercaptans may be used to lower the molecular weight of the formed polymer and/or to provide a different molecular weight distribution than would otherwise have been obtained with any free-radical-generating initiator(s). Linear or branched C₄-C₂₂ alkyl mercaptans such as n-dodecyl mercaptan and t-dodecyl mercaptan are preferred. Chain transfer agent(s) may be added in one or more additions or continuously, linearly or not, over most or all of the entire reaction period or during limited portion(s) of the reaction period such as, for example, in the kettle charge and in the reduction of residual monomer stage.

In one embodiment at least one of the stages in the multistage emulsion polymer is prepared by a polymerization process having controlled conversion of the monomer to polymer. In the controlled conversion process as defined herein, the monomer is added to an aqueous reaction medium and polymerized in the presence of at least 5 weight % added monomer that has remained unreacted, based on the accumulated weight of added monomer. In this embodiment, at least 40 wt %, preferably at least 60 wt%, and more preferably at least 90 wt% of at least one of the polymer stages is prepared in the presence of excess unreacted monomer.

The multistage emulsion polymerization process, in which at least two stages differing in composition are polymerized in sequential fashion, usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. The multistage emulsion polymer may also be formed in two or more stages, the stages differing in molecular weight as well as in composition.

The multistage emulsion polymer has an average particle diameter from 20 to 1000 nanometers, preferably from 70 to 300 nanometers. Particle sizes herein are those determined using a Brookhaven Model BI-90 particle sizer manufactured by Brookhaven Instruments Corporation, Holtsville NY, reported as "effective diameter". Also contemplated are multimodal particle size emulsion polymers wherein one or more of the particle size modes are multistage emulsion polymers and wherein two or more distinct particle sizes or very broad distributions are provided as is taught in US Patents No. 5,340,858; 5,350,787; 5,352,720; 4,539,361; and 4,456,726.

In one embodiment the multistage emulsion polymer may be contacted with a crosslinking agent. The crosslinking agents are those coreactive with functional groups on the multistage emulsion polymer, such as amine groups, keto groups, aldehyde groups, acetoacetoxy groups, cyanoacetoxy groups, hydroxy groups, epoxy groups, and acid groups. The type and level of crosslinking agent are chosen such that the ability of the multistage emulsion polymer composition to form a film is not materially affected. The crosslinking agent may be incorporated into the multistage emulsion polymer before, during, or after the polymerization. Suitable crosslinking agents include, for example; multifunctional amine compounds, oligomers and polymers that have at least two amine groups such as hexamethylene diamine, ethylenediamine, 1,2-diaminopropane, 2-methyl-1,5-pentane diamine, 1,4-diaminobutane, 1,12-diaminododecane, 1,2-diaminocylcohexane, 1,2-phenyldiamine, diaminotoluene, polyethylene imine, difunctional and trifunctional Jeffamine™ curing agents (Huntsman Petrochemical Corporation), and aqueous polyurethane dispersions with pendant amino, hydrazide or hydrazine groups; aminosilanes such as 3-aminopropyltrimethoxysilane, 3-aminopropyltriethoxysilane, 3-aminopropylmethyldimethoxysilane, 3-aminopropylmethyldiethoxysilane, 3-aminopropyltriisopropoxysilane, 3-aminopropylmethyldiisopropoxysilane, 3-aminopropylmethyldiisopropoxysilane, 3-aminopropyltriisopropoxysilane, N-2-aminoethyl-3-aminopropyltrimethoxysilane, N-2-aminoethyl-3-aminopropyltriethoxysilane, N-2-aminoethyl-3-aminopropylmethyldimethoxysilane, N-2-aminoethyl-3-aminopropylmethyldiethoxysilane, N-2-aminoethyl-3-aminopropyltriisopropoxysilane, N-2-aminoethyl-3-aminopropyltriisopropoxysilane, N-2-aminoethyl-3-aminopropylmethyldiisopropoxysilane, and N-2-aminoethyl-3-aminopropylmethyldiisopropoxysilane; epoxy silanes such as glycidoxypropyltrimethoxysilane, glycidoxypropylmethyldimethoxysilane, glycidoxypropyltriethoxysilane, glycidoxypropylmethyldiethoxysilane, or beta-(3,4-epoxycyclohexyl)ethyltriethoxysilane; multifunctional isocyanates such as Bayhydur™ XP-7063 isocyanate (Bayer); aliphatic carbodiimides such as Ucarlink™ XL-29SE crosslinker (Dow Chemical Co.) , or those disclosed in U.S. Patent 4,977,219; aromatic carbodiimides such as disclosed in U.S. 5,574,083; divalent metal ions such as Zn²⁺, Mg²⁺, Ca²⁺; and zirconates such as ammonium zirconium carbonate. Preferably, the multifunctional amine compounds employed as crosslinking agents in the polymer composition are primary amine groups. Preferred levels for the multifunctional amine compounds with primary amine groups in the polymer composition is a ratio of 0.1 to 1 primary amine groups per coreactive group. Preferred aminosilanes include N-2-aminoethyl-3-aminopropylmethyldimethoxysilane, N-2-aminoethyl-3-aminopropyltrimethoxysilane, and 3-aminopropylmethyldimethoxysilane.

The aqueous coating composition of the present invention is prepared by techniques which are well known in the coatings art. First, if the coating composition is to be pigmented, at least one pigment is typically well dispersed in an aqueous medium under high shear such as is afforded by a COWLES® mixer. Then the aqueous multistage emulsion polymer is added under lower shear stirring along with other coating adjuvants as desired. Alternatively, the aqueous multistage emulsion polymer may be included in the pigment dispersion step. The aqueous coating composition may contain conventional coating adjuvants such as, for example, tackifiers, pigments, emulsifiers, crosslinkers, coalescing agents, buffers, neutralizers, thickeners or rheology modifiers, humectants, wetting agents, biocides, plasticizers, antifoaming agents, colorants, waxes, and anti-oxidants. The aqueous coating composition may contain up to 50%, by weight based on the dry weight of the multistage emulsion polymer, of an emulsion polymer not meeting the limitations of the multistage emulsion polymer of the present invention, including a film-forming and/or a non-film-forming emulsion polymer.

Preferably the aqueous coating composition contains less than 5% VOC by weight based on the total weight of the coating composition; more preferably the aqueous coating composition contains less than 3% VOC by weight based on the total weight of the coating composition; even more preferably the aqueous coating composition contains less than 1.7% VOC by weight based on the total weight of the coating composition. A volatile organic compound ("VOC") is defined herein as a carbon containing compound that has a boiling point below 280°C at atmospheric pressure, compounds such as water and ammonia being excluded from VOCs.

A "low VOC" coating composition herein is a coating composition which contains less than 5% VOC by weight based on the total weight of the coating composition; preferably it contains between 1. 7% and 0.01% by weight based on the total weight of the coating composition.

Frequently a VOC is deliberately added to a paint or coating to improve the film properties or to aid in coatings application properties. Examples are glycol ethers, organic esters, aromatic compounds, ethylene and propylene glycol, and aliphatic hydrocarbons. It is preferred that the coating composition contains less than than 5% by weight based on the total weight of the coating composition of the added VOCs and more preferably less than 1. 7% by weight based on the total weight of the coating composition of the added VOCs.

Additionally, the low VOC coating composition may contain coalescing agents which are not VOCs. A coalescing agent is a compound that is added to a water-borne emulsion polymer, paint or coating and which reduces the minimum film forming temperature (MFFT) of the emulsion polymer, paint or coating by at least 1°C. The MFFT is measured using ASTM test method D2354. Examples of coalescing agents that are not VOCs include plasticizers, low molecular weight polymers, surfactants, and autooxidizable plasticizers such as alkyl esters of unsaturated fatty acids. A non-VOC coalescing agent is a coalescing agent which has a boiling point above 280°C at atmospheric pressure. Preferred are alkyl esters prepared from oils such as linseed, tung, dehydrated castor, soybean, tall, sunflower, and corn. Examples of non-VOC coalescing agents include esters of unsaturated fatty acids, such as mono, di-, or triunsaturated fatty acids. Suitable unsaturated fatty acid esters include monounsaturated fatty acid esters formed from palmitoleic acid, oleic acid, or caproleic acid; diunsaturated fatty acid esters formed from linoleic acid; triunsaturated fatty acid esters formed from linolenic acid or eleosteric acid, or mixtures thereof. Suitable esters of unsaturated fatty acids includes alkyl esters such as, such as methyl and ethyl esters; substituted alkyl esters, such as esters formed from ethylene glycol and propylene glycol; and alkyl ether esters of unsaturated fatty acids, diethylene glycol, triethylene glycol, dipropylene glycol, tripropylene glycol, and diethylene glycol monobutyl ether. In one embodiment, the above autooxidizable plasticizers are used in conjunction with multistage emulsion polymers which contain 0.25% to 12.5% of acetoacetoxyethyl (meth)acrylate as polymerized units based on the total weight of copolymerized monomer units in the multistage emulsion polymer. Autooxidation can further be enhanced by the use of metal ion catalysts such as cobalt, zirconium, calcium, manganese, copper, zinc and iron. Simple salts such as halides, nitrates, and sulfates may be used but in many cases an organic anion such as the acetate, naphthenate or acetoacetonate is used.

Typical methods of paint or coating preparation may introduce adventitious VOCs from the emulsion polymer, biocides, defoamers, soaps, dispersants, and thickeners. These typically account for 0.1% VOC by weight based on the total weight of the coating composition. Additional methods such as steam stripping and choice of low VOC containing additives like biocides, defoamers, soaps, dispersants, and thickeners, can be used to further reduce the paint or coating to less than 0.01% VOC by weightbased on the total weight of the coating composition.

In a preferred embodiment the aqueous coating composition has a PVC of 15 to 38 and has less than 5% VOC by weight based on the total weight of the coating composition. In another preferred embodiment the aqueous coating composition has a PVC of greater than 38 and has less than 3% VOC by weight based on the total weight of the coating composition. In an additional embodiment embodiment the aqueous coating composition has a PVC of 15 to 85 and has less than 1.6% VOC by weight based on the total weight of the coating composition.

The solids content of the aqueous coating composition may be from about 10% to about 85 % by volume. The viscosity of the aqueous composition may be from 0.05 to 2000 Pa.s (50 cps to 2,000,000 cps), as measured using a Brookfield viscometer; the viscosities appropriate for different end uses and application methods vary considerably.

The aqueous composition may applied by conventional application methods such as, for example, brush or paint roller, air-atomized spray, air-assisted spray, airless spray, high volume low pressure spray, air-assisted airless spray, and electrostatic spray.

The aqueous composition may be applied to a substrate such as, for example, plastic including sheets and films, glass, wood, metal such as aluminum, steel, and phosphate or chromate-treated steel, previously painted surfaces, weathered surfaces, cementitious substrates, and asphaltic substrates, with or without a prior substrate treatment such as a primer.

The aqueous composition coated on the substrate is typically dried, or allowed to dry, at a temperature from 20°C to 95°C.

The following examples are presented to illustrate the invention and the results obtained by the test procedures.

### Scrub Resistance Test

The scrub resistance of the coating compositions was measured according to ASTM Test Method D 2486-74A.

### König Hardness

The paints were cast on untreated aluminum panels using a 5 mil applicator blade. The samples were allowed to dry in a controlled environment (73.5 +/-3.5° F and 50 +/- 5%) for 7 days. König Hardness was measured using a BYK Mallinckrodt instrument. Reported values are the averages of three separate measurements at different points on the drawdown.

### Tensile Measurements

Paints were cast on glass panels using a 40 mil applicator blade. The drawdowns were allowed to dry for 16 days in a controlled environment (73.5 +/-3.5 °F and 50 +/- 5% RH). Each panel was then soaked in water for 10 min and then eased off of the substrate with the aid of a spatula. The free films were patted dry and transferred to release paper. After an additional 24 h, dogbone shaped specimens were stamped from each film using a hydraulic press and an appropriately shaped cut-out. After a total of 18 days had past since the films were cast, tensile measurements were carried out using an Instron Model 1122 under controlled temperature and humidity conditions (73.5 +/- 3.5° F and 60 +/-5% RH). The specimens were strained at a rate of 2 inches/minute.

### Abbreviation

DI water = deionized water

Note: "Oxidant" and "reductant" are used synonymously herein with "catalyst" and "activator", respectively.

**Monomer Emulsions for All Examples and Comparatives**

| | A Series | B Series |
|---|---|---|
| Monomer Emulsion 1 ME1 | | |
| DI Water | 206 | 206 |
| Sodium alkyl polyethoxy sulfate surfactant (30%) | 25.9 | 25.9 |
| Butyl Acrylate | 444.2 | 444.2 |
| Methyl Methacrylate | 227.0 | 227.0 |
| Methacrylic Acid | 22.6 | 22.6 |
| Ureido Methacrylate (50%) | 22.6 | 22.6 |
| Vessel Rinse DI Water | 10 | 10 |

| Monomer Emulsion 2 ME2 | | |
|---|---|---|
| DI Water | 68.8 | 68.8 |
| Sodium alkyl polyethoxy sulfate surfactant (30%) | 8.6 | 8.6 |
| Butyl Acrylate | 60.6 | 23.5 |
| Methyl Methacrylate | 174.4 | 211.5 |
| Vessel Rinse DI Water | 10 | 10 |
| Note: weights in g | | |

### EXAMPLE 1. Preparation of aqueous multistage emulsion polymer

### Kettle Catalyst:

0.14g ammonium persulfate, 0.10g 70% t-butyl hydroperoxide dissolved in 12.5g DI water

### Kettle Activator:

0.12g sodium bisulfite, 0.035g sodium hydrosulfite dissolved in 10 DI water

### Stage 1 Catalyst

1.48g 85% t-amyl hydroperoxide diluted with 57 g DI water

### Stage 1 Activator

0.99g isoascorbic acid dissolved in 57 DI water

### Inter-Stage Catalyst

0.5g 85% t-amyl hydroperoxide diluted with 10g DI water

### Inter-Stage Activator

0.47g IAA dissolved in 18g DI water

### Inter-Stage Additive

5% modified alkyl derivative of cyclic amine diluted with 3g DI water

### Stage 2 Catalyst

0.41g 85% t-amyl hydroperoxide diluted with 20g DI water

### Stage 2 Activator

0.36g isoascorbic acid dissolved in 20g DI water

### Post-Feed Catalyst and Activator 1

0.22g 85% t-amyl hydroperoxide diluted with 5g DI water

0.19g isoascorbic acid dissolved in 8g DI water

### Post-Feed Catalyst and Activator 2

0.19g 85% t-amyl hydroperoxide diluted with 8g DI water

0.19g isoascorbic acid dissolved in 8g DI water

B Series Monomer Emulsions 1 and 2 were prepared by adding DI Water and surfactant to a container and stirring. Then the monomers were added slowly while still stirring to form a stable, milky monomer emulsion. A 4-neck, 3-liter, round bottom flask equipped with stirrer was charged with 570g DI water and 5.7g 30% sodium alkyl polyethoxy sulfate surfactant and heated to 67-68°C. To the kettle, 0.026g 5% modified alkyl derivative of cyclic amine in 3 g DI was added. A solution of 0.003g ferrous sulfate heptahydrate in 4.1 g DI water was combined with a solution of 0.07g tetrasodium salt of ethylenediamine tetraacetic acid dissolved in 4 g DI water and added to the kettle. A pre-emulsion consisting of 35g of B Series ME1 (per table above) was then charged followed by the Kettle Catalyst and Kettle Activator. After 5 minutes, the Stage 1 Catalyst was added to the kettle and the ME 1 feed and the Stage 1 Activator feeds were begun. The batch temperature was held at 67-70°C throughout the 1 hour Stage 1 feed. At the completion of the B Series ME1 and Stage 1 Activator feeds, the batch was held at 67-68°C for ten minutes before starting to cool to 43-45°C. The Inter-Stage Catalyst was added followed by a 20 minute gradual addition of the Inter-stage Activator. On completion of the Inter-Stage Activator addition and after the batch temperature reached 43-45°C, the Inter-Stage Additive was charged to the kettle followed by the addition of the B Series ME2 and rinse. The Stage 2 Catalyst and Stage 2 Activator solutions were charged in order and the batch was allowed to exotherm. After 10 minutes, the batch temperature reached 60°C and 15 g DI water were added. The temperature was adjusted to = 65°C and the Post-Feed Catalyst and Activator 1 was added to the kettle. After 15 minutes, the Post-Feed Catalyst and Activator 2 were added. After 15 minutes, the batch was cooled to 40°C and neutralized to pH 8.8-9.5 with ammonia. A preservative was added followed by a final dilution with 30g DI water.

### EXAMPLE 2. Preparation of aqueous multistage emulsion polymer

Prepared according to Example 1 but with A Series ME1 and ME2.

### COMPARATIVE EXAMPLE A. Preparation of aqueous multistage emulsion polymer

### Kettle Catalyst:

1.88g ammonium persulfate in 12.5g DI water

### Kettle Buffer

2.82g sodium carbonate in 47 g DI water

### Cofeed Initiator

0.94g ammonium persulfate in 61 g DI water

### Post-Feed Catalyst and Activator 1

0.46g 70% t-butyl hydroperoxide in 5g DI water

0.37g isoascorbic acid dissolved in 8g DI water

### Post-Feed Catalyst and Activator 2

0.23g 70% t-butyl hydroperoxide in 10g DI water

0.19g isoascorbic acid dissolved in 12g DI water

Series B Monomer Emulsions 1 and 2 were prepared by adding DI Water and sodium alkyl polyethoxy sulfate surfactant (30% active) to a container and stirring. Then the monomers were added slowly while still stirring to form a stable, milky monomer emulsion. A 4-neck, 3-liter, round bottom flask equipped with stirrer was charged with 590g DI water and 4.7g sodium alkyl polyethoxy sulfate surfactant (30%) and heated to 84-86°C. A pre-emulsion consisting of 35g of ME1 (per table above) was then charged followed by the Kettle Catalyst. After two minutes, the Kettle Buffer was added to the kettle. After 2 minutes, the Cofeed Initiator and B Series ME 1 feed were begun@ 0.6ml/min and 13.4mls/min respectively. The batch temperature was held at 84-86°C throughout the Stage 1 feed. At the completion of the B Series ME1 and rinse, the Initiator Cofeed was interrupted and the batch was held at 84-86°C for 10-15 minutes. Then the Cofeed Initiator feed was resumed. The addition of the B Series ME2 was started at a rate of 13.4 ml/min. until all feeds, including the ME2 rinse, were completed. After 20 minutes, the batch was cooled to 65°C and 37.6 g of DI water was added. Then 0.005g ferrous sulfate heptahydrate dissolved in 6.3g DI water was added to the kettle followed by the additions of the Post-Feed Catalyst and Activator 1 solutions. After 15 minutes, the batch temperature was cooled to 55-60°C at which time the Post-feed Catalyst and Activator 2 were added. After 15 minutes, the batch was cooled to 40°C and neutralized to pH 8.8-9.5. A preservative and 30g additional water was added.

### COMPARATIVE EXAMPLE B. Preparation of aqueous multistage emulsion polymer

Prepared according to Comparative Example A but with A Series ME1 and ME2.

### COMPARATIVE EXAMPLE C. Preparation of aqueous multistage emulsion polymer

### Kettle Catalyst:

0.14g ammonium persulfate, 0.10g 70% t-butyl hydroperoxide dissolved in 12.5g DI water

### Kettle Activator:

0.12g sodium bisulfite, 0.035g sodium hydrosulfite dissolved in 10 DI water

### Stage 1 Cofeed Catalyst

0.86g 70% t-butyl hydroperoxide diluted with 57 g DI water

### Stage 1 Cofeed Activator

0.79g sodium bisulfite dissolved in 57 DI water

### Inter-Stage Catalyst

0.52g 70% t-butyl hydroperoxide diluted with 10g DI water

### Inter-Stage Activator

0.47g IAA dissolved in 18g DI water

### Inter-Stage Additive

5% modified alkyl derivative of cyclic amine diluted with 3g DI water

### Stage 2 Catalyst and Activator

0.43g 70% t-butyl hydroperoxide diluted with 20g DI water

0.36g isoascorbic acid dissolved in 20g DI water

### Post-Feed Catalyst and Activator 1

0.46g 70% t-butyl hydroperoxide diluted with 5g DI water

0.37g isoascorbic acid dissolved in 8g DI water

### Post-Feed Catalyst and Activator 2

0.23g 70% t-butyl hydroperoxide diluted with 5g DI water

0.19g isoascorbic acid dissolved in 8g DI water

B Series Monomer Emulsions 1 and 2 were prepared by adding DI Water and sodium alkyl polyethoxy sulfate surfactant (30% active) to a container and stirring. Then the monomers were added slowly while still stirring to form a stable, milky monomer emulsion. To ME1 was added 4.8g 29% ammonia. A 4-neck, 3-liter, round bottom flask equipped with stirrer was charged with 570g DI water and 5.7g sodium alkyl polyethoxy sulfate surfactant (30%) and heated to 67-68°C. To the kettle, 0.026g 5% modified alkyl derivative of cyclic amine in 3 g DI water was added. A solution of 0.003g ferrous sulfate heptahydrate in 4.1 g DI water was combined with a solution of 0.07g tetrasodium salt of ethylenediamine tetraacetic acid dissolved in 4 g DI water and added to the kettle. A pre-emulsion consisting of 35g of ME1 (per table above) was then charged followed by the Kettle Catalyst and Kettle Activator. After 5 minutes, the gradual additions of the B Series ME 1 feed and the Stage 1 Cofeed Catalyst and Activator were begun at rates of 9.1 g/min and 0.5g/minute respectively. After 10 minutes, the feed rates were doubled. The batch temperature was held at 67-70°C throughout the Stage 1 feed. At the completion of the B Series ME1 and Cofeed Initiator feeds, the batch was held at 67-68°C for ten minutes before starting to cool to 43-45°C. The Inter-stage Catalyst was added followed by a 20 minute gradual addition of the Inter-stage Activator. On completion of the Interstage Activator addition and when the batch temperature reached 43-45°C, the Inter-Stage Additive was charged to the kettle followed by the addition of the B Series ME2 and rinse as quickly as possible. The Stage 2 Catalyst and Stage 2 Activator solutions were charged in order and the batch was allowed to exotherm. After 10 minutes, the batch temperature reached ∼60 °C. The temperature was adjusted to = 65°C and the Post-feed Catalyst and Activator 1 was added to the kettle. After 15 minutes, the Post-feed Catalyst and Activator 2 were added. After 15 minutes, the batch was cooled to 40°C and neutralized to pH 8.8-9.5. A preservative was also added.

### COMPARATIVE EXAMPLE D. Preparation of aqueous multistage emulsion polymer

Prepared according to Comparative Example C but with A Series ME1 and ME2.

### COMPARATIVE EXAMPLE E. Preparation of aqueous multistage emulsion polymer

### Kettle Catalyst:

0.14g ammonium persulfate, 0.10g 70% t-butyl hydroperoxide dissolved in 12.5g DI water

### Kettle Activator:

0.12g sodium bisulfite, 0.035g sodium bisulfate dissolved in 10 DI water

### Stage 1 Cofeed Catalyst and Activator

1.15g 70% t-butyl hydroperoxide diluted with 57 g DI water

1.05g sodium bisulfite dissolved in 57 DI water

### Inter-Stage Catalyst

0.52g 70% t-butyl hydroperoxide diluted with 10g DI water

### Inter-Stage Activator

0.47g IAA dissolved in 18g DI water

### Inter-Stage Additive

5% modified alkyl derivative of cyclic amine diluted with 3g DI water

### Stage 2 Catalyst and Activator

0.43g 70% t-butyl hydroperoxide diluted with 20g DI water

0.36g isoascorbic acid dissolved in 20g DI water

### Post-Feed Catalyst and Activator 1

0.46g 70% t-butyl hydroperoxide diluted with 5g DI water

0.37g isoascorbic acid dissolved in 8g DI water

### Post-Feed Catalyst and Activator 2

0.23g 70% t-butyl hydroperoxide diluted with 5g DI water

0.19g isoascorbic acid dissolved in 8g DI water

Series B Monomer Emulsions 1 and 2 were prepared by adding DI Water and sodium alkyl polyethoxy sulfate surfactant (30% active) to a container and stirring. Then the monomers were added slowly while still stirring to form a stable, milky monomer emulsion. To ME1 was added 4.8g 29% ammonia. A 4-neck, 3-liter, round bottom flask equipped with stirrer was charged with 570g DI water and 5.7g Sodium alkyl polyethoxy sulfate surfactant (30%) and heated to 67-68°C. 0.026g 5% modified alkyl derivative of cyclic amine in 3 g DI water was added. A solution of 0.003g ferrous sulfate heptahydrate in 4.1 g DI water was combined with a solution of 0.07g Versene dissolved in 4 g DI water and added to the kettle. A pre-emulsion consisting of 35g of ME1 (per table above) was then charged followed by the Kettle Catalyst and Kettle Activator. After 5 minutes, the gradual additions of the B Series ME 1 feed and the Cofeed Initiators were begun at rates of 9.1 g/min and 0.5g/minute respectively. After 10 minutes, the feed rates were increased by 2X. The batch temperature was held at 67-70°C throughout the Stage 1 feed. At the completion of the B Series ME1 and rinse, Cofeed Initiator feeds were interrupted. The batch was held at 67-68°C for ten minutes. The Inter-stage Catalyst was added followed by a 10 minute gradual addition of the Inter-stage Activator. On completion of the Inter-stage Activator addition, the batch temperature was adjusted to 67-70°C, and the Series B ME2 feed was initiated at 18.3g/minute. At the same time, the Cofeed Initiator feeds were resumed at 1g/minute. The temperature was held at 67-70°C throughout the completion of stage 2 cofeeds. When all feeds were completed, the batch was held at temperature for 20 minutes. Then it was cooled to 60-65°C and the Post-feed Catalyst and Activator 1 was added. After 15 minutes, the Post-feed Catalyst and Activator 2 were added. After 15 minutes, the batch was cooled to 40°C and neutralized to pH 8.5-9.0. A preservative was also added.

### COMPARATIVE EXAMPLE F. Preparation of aqueous multistage emulsion polymer

Prepared according to Comparative Example E but with A Series ME1 and ME2.

### EXAMPLE 3. Preparation of aqueous multistage emulsion polymer

### Kettle Catalyst:

0.14g ammonium persulfate, 0.10g 70% t-butyl hydroperoxide dissolved in 12.5g DI water

### Kettle Activator:

0.12g sodium bisulfite, 0.035g sodium bisulfate dissolved in 10 DI water

### Stage 1 Cofeed Catalyst and Activator

1.15g 70% t-butyl hydroperoxide diluted with 57 g DI water

1.05g sodium bisulfite dissolved in 57 DI water

### Inter-Stage Catalyst

0.52g 85% t-butyl hydroperoxide diluted with 10g DI water

### Inter-Stage Activator

0.47g IAA dissolved in 18g DI water

### Inter-Stage Additive

*5% modified alkyl derivative of cyclic amine* diluted with 3g DI water

### Stage 2 Catalyst and Activator

0.43g 70% t-butyl hydroperoxide diluted with 20g DI water

0.36g isoascorbic acid dissolved in 20g DI water

### Post-Feed Catalyst and Activator 1

0.22g 85% t-amyl hydroperoxide diluted with 5g DI water

0.19g isoascorbic acid dissolved in 8g DI water

### Post-Feed Catalyst and Activator 2

0.19g 85% t-amyl hydroperoxide diluted with 8g DI water

0.19g isoascorbic acid dissolved in 8g DI water

Series B Monomer Emulsions 1 and 2 were prepared by adding DI Water and sodium alkyl polyethoxy sulfate surfactant (30% active) to a container and stirring. Then the monomers were added slowly while still stirring to form a stable, milky monomer emulsion. To ME1 was added 4.8g 29% ammonia. A 4-neck, 3-liter, round bottom flask equipped with stirrer was charged with 570g DI water and 5.7g sodium alkyl polyethoxy sulfate surfactant (30%) and heated to 67-68°C. 0.026g 5% modified alkyl derivative of cyclic amine in 3 g DI water was added. A solution of 0.003g ferrous sulfate heptahydrate in 4.1 g DI water was combined with a solution of 0.07g Versene dissolved in 4 g DI water and added to the kettle. A pre-emulsion consisting of 35g of ME1 (per table above) was then charged followed by the Kettle Catalyst and Kettle Activator. After 5 minutes, the gradual additions of the B Series ME 1 feed and the Cofeed Initiators were begun at rates of 9.1 g/min and 0.5g/minute respectively. After 10 minutes, the feed rates were increased by 2X. The batch temperature was held at 67-70°C throughout the Stage 1 feed. At the completion of the B Series ME1 and rinse, Cofeed Initiator feeds were interrupted. The batch was held at 67-68°C for ten minutes. The Inter-Stage Catalyst was added followed by a 10 minute gradual addition of the Inter-Stage Activator. On completion of the Inter-Stage Activator addition, the batch temperature was adjusted to 67-70°C, and the Series B ME2 feed was initiated at 18.3g/minute. At the same time, the Cofeed Initiator feeds were resumed at 1g/minute. The temperature was held at 67-70°C throughout the completion of stage 2 cofeeds. When all feeds were completed, the batch was held at temperature for 20 minutes. Then it was cooled to 60-65°C and the Post-feed Catalyst and Activator 1 was added. After 15 minutes, the Post-feed Catalyst and Activator 2 were added. After 15 minutes, the batch was cooled to 40°C and neutralized to pH 8.5-9.0. A preservative was also added.

### EXAMPLE 4. Preparation of aqueous coating compositions

150 g/L VOC Paint Formulations were prepared using the following ingredients

| | | |
|---|---|---|
| TI-PURE™ R-746 | Titanium Dioxide | 163.2 g |
| Propylene Glycol | | 17.3 g |
| | | |
| Emulsion Polymer | | 277.8 |
| TEXANOL™ | Coalescent | 6.2 g |
| AEROSOL™ OT-75 | Surfactant | 0.5 g |
| BYK™-022 | Defoamer | 1.1 g |
| Ammonia (28%) | | 0.5 g |
| ACRYSOL™ RM-2020 NPR | Thickener | 7.3 g |
| ACRYSOL™ SCT-275 | Thickener | 6.6 g |
| Water | | 44.9 g |

### EXAMPLE 5. Scrub resistance testing of coated aqueous coating compositions

**Table 5.1. Scrub Resistance (First Cut Through)**

| | | Abrasive Scrub Resistance | |
|---|---|---|---|
| Coating containing Emulsion polymer | Stage II Tg (°C) | N (1) | Average (2) |
| Example 1 | 80 | 8 | 855 |
| Example 2 | 45 | 8 | 975 |
| Comp. Ex. A | 80 | 4 | 633 |
| Comp. Ex. B | 45 | 8 | 723 |
| Comp. Ex. C | 80 | 4 | 787 |
| Comp. Ex. D | 45 | 8 | 914 |

| | | | |
|---|---|---|---|
| Notes: (1) N = number of data points used to calculate the average. | | | |
| (2) Average number of cycles to cut through to the substrate across the raised shim. | | | |

Scrub resistance is superior for the Examples 1-2 of this invention relative to the corresponding Comparative Examples having the same Tg second charge (First stage Tg = -13 °C for all samples) , namely Example 1 compared with Comp. Ex. A and Comp. Ex. C and Example 2 compared with Comp. Ex. B and Comp. Ex. D.

### EXAMPLE 6. Konig hardness testing of coated aqueous coating compositions

**Table 6.1. Konig Hardness**

| Coating containing Emulsion polymer | Stage II Tg (°C) | Konig Hardness |
|---|---|---|
| Example 1 | 80 | 26.1 |
| Example 3 | 80 | 22.4 |
| Comp. Ex. C | 80 | 20.5 |
| Comp. Ex. E | 80 | 19.1 |

Konig hardness is superior for the Examples 1 and 3 of this invention relative to the Comparative Examples C and E having the same Tg second charge (First stage Tg = -13 °C for all samples).

### EXAMPLE 7. INSTRON™ tensile testing of coated aqueous coating compositions

**Table 7.1. Elongation at Break**

| | | Elongation at Break (%) | |
|---|---|---|---|
| Coating containing Emulsion polymer | Stage II Tg (°C) | Average | Std. Dev. |
| Example 1 | 80 | 412 | 21 |
| Example 2 | 45 | 617 | 55 |
| Comp. Ex. A | 80 | 333 | 18 |
| Comp. Ex. C | 80 | 296 | 20 |
| Comp. Ex. D | 45 | 510 | 21 |
| Comp. Ex. E | 80 | 294 | 12 |
| Comp. Ex. F | 45 | 543 | 34 |

Elongation at break is superior for Examples 1-2 of this invention relative to the corresponding Comparative Examples having the same Tg second charge (First stage Tg = -13 °C for all samples) , namely Example 1 compared with Comp. Ex. A, Comp. Ex. C and Comp. Ex. E and Example 2 compared with Comp. Ex. D and Comp. Ex. F.

### EXAMPLE 8. Preparation of aqueous multistage emulsion polymer for Low VOC formulation

This example was prepared according to the process described in Example 1 but with the monomer emulsion charges presented in Table 8.1

**Table 8.1. Monomer Emulsions for Example 8**

| Monomer Emulsion 1 | |
|---|---|
| (ME1) | |
| DI Water | 206 |
| Sodium alkyl polyethoxy | 25.9 |
| sulfate surfactant (30%) | |
| Butyl Acrylate | 514.0 |
| Methyl Methacrylate | 157.2 |
| Methacrylic Acid | 22.6 |
| Ureido Methacrylate (50%) | 22.6 |
| Vessel Rinse DI Water | 10 |

| Monomer Emulsion 2 | |
|---|---|
| (ME2) | |
| DI Water | 68.8 |
| Sodium alkyl polyethoxy sulfate surfactant (30%) | 8.6 |
| Butyl Acrylate | 23.5 |
| Methyl Methacrylate | 211.5 |
| Vessel Rinse DI Water | 10 |

### EXAMPLE 9. Preparation an aqueous coating composition of the invention at at calculated VOC of 150 g/l

| | | |
|---|---|---|
| TI-PURE™ R-746 | Titanium Dioxide | 163.2 g |
| | | |
| Example 8 Emulsion polymer | | 277.8 g |
| AEROSOL™ OT-75 | Surfactant | 0.5 g |
| BYK™-022 | Defoamer | 1.1 g |
| Ammonia (28%) | | 0.5 g |
| ACRYSOL™ RM-2020 NPR | Thickener | 7.3 g |
| ACRYSOL™ SCT-275 | Thickener | 6.6 g |
| Water | | 68.21 g |

## Claims

1. An aqueous multistage emulsion polymer formed by the free radical polymerization in at least two stages of, in each stage, at least one ethylenically unsaturated nonionic acrylic monomer wherein said monomer, when polymerised, does not bear an ionic charge between pH=1 to 14, the polymer in two of said stages having glass transition temperatures (Tg) differing by at least 10°C; said polymerization, in at least one stage, being effected in the presence of 0.01-1.0%%, by weight based on the dry weight of said stage polymer, t-alkyl hydroperoxide, t-alkyl peroxide, or t-alkyl perester wherein the t-alkyl group includes at least 5 Carbon atoms.

2. The aqueous multistage emulsion polymer of claim 1 comprising from 5% to 70% by weight, based on dry multistage polymer weight, of a first stage polymer having a Tg of from 25°C to 125°C and from 30% to 95% by weight, based on dry multistage polymer weight, of a second stage polymer having a Tg of from -40°C to 50°C.

3. The aqueous multistage emulsion polymer of claim 1 or claim 2 wherein said polymerization, in at least one stage, is effected in the presence of 0.01-1.0%%, by weight based on the dry weight of said stage polymer, t-amyl hydroperoxide.

4. An aqueous coating composition comprising the aqueous multistage emulsion polymer of claim 1 or claim 2.

5. A method for preparing an aqueous multistage emulsion polymer comprising forming said multistage polymer by the free radical polymerization in at least two stages of, in each stage, at least one ethylenically unsaturated nonionic acrylic monomer, wherein said monomer, when polymerised, does not bear an ionic charge between pH=1 to 14, the polymer in two of said stages having glass transition temperatures (Tg) differing by at least 10°C; said polymerization, in at least one stage, being effected in the presence of 0.01-1.0%%, by weight based on the dry weight of said stage polymer, t-alkyl hydroperoxide, t-alkyl peroxide, or t-alkyl perester wherein the t-alkyl group includes at least 5 Carbon atoms.

6. The method of claim 5 wherein said polymerization, in at least one stage, is effected in the presence of 0.01-1.0%%, by weight based on the dry weight of said stage polymer, t-amyl hydroperoxide.

7. A method for providing a coated substrate comprising:
forming the aqueous coating composition of claim 4;
applying said aqueous coating composition to said substrate; and
drying, or allowing to dry, said aqueous composition.

## Patentansprüche

1. Wäßriges Mehrstufen-Emulsionspolymer, gebildet durch die radikalische Polymerisation in mindestens zwei Stufen aus, in jeder Stufe, mindestens einem ethylenisch ungesättigten, nicht-ionischen Acrylmonomer, wobei das Monomer, wenn polymerisiert, keine ionische Ladung zwischen pH=1 bis 14 trägt, wobei das Polymer in zwei der Stufen Glasübergangstemperaturen (Tg) aufweist, welche sich um mindestens 10°C unterscheiden, wobei die Polymerisation, in mindestens einer Stufe, in der Gegenwart von 0,01-1,0 Gew.-%, bezogen auf das Trockengewicht des Stufenpolymers, t-Alkylhydroperoxid, t-Alkylperoxid oder t-Alkylperester bewirkt wird, wobei die t-Alkylgruppe mindestens 5 Kohlenstoffatome einschließt.

2. Wäßriges Mehrstufen-Emulsionspolymer nach Anspruch 1, umfassend von 5 bis 70 Gew.-%, bezogen auf das Trockengewicht des Mehrstufenpolymers, eines ersten Stufenpolymers mit einer Tg von 25°C bis 125°C und von 30 bis 95 Gew.-%, bezogen auf das Trockengewicht des Mehrstufenpolymers, eines zweiten Stufenpolymers mit einer Tg von -40°C bis 50°C.

3. Wäßriges Mehrstufen-Emulsionspolymer nach Anspruch 1 oder Anspruch 2, wobei die Polymerisation, in mindestens einer Stufe, in der Gegenwart von 0,01 bis 1,0 Gew.-%, bezogen auf das Trockengewicht des Stufenpolymers, t-Amylhydroperoxid bewirkt wird.

4. Wäßrige Beschichtungszusammensetzung, umfassend das wäßrige Mehrstufen-Emulsionspolymer nach Anspruch 1 oder Anspruch 2.

5. Verfahren zum Herstellen eines wäßrigen Mehrstufen-Emulsionspolymers, umfassend das Bilden des Mehrstufenpolymers durch die radikalische Polymerisation in mindestens zwei Stufen aus, in jeder Stufe, mindestens einem ethylenisch ungesättigten, nicht-ionischen Acrylmonomer, wobei das Monomer, wenn polymerisiert, keine ionische Ladung zwischen pH=1 bis 14 trägt, wobei das Polymer in zwei der Stufen Glasübergangstemperaturen (Tg) aufweist, welche sich um mindestens 10°C unterscheiden, wobei die Polymerisation, in mindestens einer Stufe, in der Gegenwart von 0,01 bis 1,0 Gew.-%, bezogen auf das Trockengewicht des Stufenpolymers, t-Alkylhydroperoxid, t-Alkylperoxid oder t-Alkylperester bewirkt wird, wobei die t-Alkylgruppe mindestens 5 Kohlenstoffatome einschließt.

6. Verfahren nach Anspruch 5, wobei die Polymerisation, in mindestens einer Stufe, in der Gegenwart von 0,01 bis 1,0 Gew.-%, bezogen auf das Trockengewicht des Stufenpolymers, t-Amylhydroperoxid bewirkt wird.

7. Verfahren zum Bereitstellen eines beschichteten Substrats, umfassend:
das Bilden einer wäßrigen Beschichtungszusammensetzung nach Anspruch 4,
das Aufbringen der wäßrigen Beschichtungszusammensetzung auf das Substrat und
das Trocknen der wäßrigen Zusammensetzung oder das Zulassen, dass die wäßrige Zusammensetzung trocknet.

## Revendications

1. Polymère à phases multiples en émulsion aqueuse formé par la polymérisation à radicaux libres dans au moins deux phases d'au moins, dans chaque phase, un monomère acrylique non ionique éthyléniquement insaturé dans lequel ledit monomère, lorsqu'il est polymérisé, ne porte pas de charge ionique entre pH = 1 et 14, le polymère dans deux desdites phases ayant des températures de transition vitreuse (Tg) différant d'au moins 10 °C ; ladite polymérisation, dans au moins une phase, étant effectuée en présence de 0,01 à 1,0 % %, en poids sur la base du poids sec du polymère de ladite phase, d'hydroperoxyde de t-alkyle, de peroxyde de t-alkyle, ou de perester de t-alkyle où le groupe t-alkyle comprend au moins 5 atomes de carbone.

2. Polymère à phases multiples en émulsion aqueuse selon la revendication 1, comprenant de 5 % à 70 % en poids, sur la base du poids du polymère à phases multiples sec, d'un polymère de première phase ayant une Tg allant de 25 °C à 125 °C et de 30 % à 95 % en poids, sur la base du poids du polymère à phases multiples sec, d'un polymère de seconde phase ayant une Tg allant de -40 °C à 50 °C.

3. Polymère à phases multiples en émulsion aqueuse selon la revendication 1 ou la revendication 2, dans lequel ladite polymérisation, dans au moins une phase, est effectuée en présence de 0,01 à 1,0 % %, en poids sur la base du poids sec du polymère de ladite phase, d'hydroperoxyde de t-amyle.

4. Composition aqueuse de revêtement comprenant le polymère à phases multiples en émulsion aqueuse selon la revendication 1 ou la revendication 2.

5. Procédé pour la préparation d'un polymère à phases multiples en émulsion aqueuse, comprenant les étapes consistant à former ledit polymère à phases multiples par la polymérisation à radicaux libres dans au moins deux phases d'au moins, dans chaque phase, un monomère acrylique non ionique éthyléniquement insaturé dans lequel ledit monomère, lorsqu'il est polymérisé, ne porte pas de charge ionique entre pH = 1 et 14, le polymère dans deux desdites phases ayant des températures de transition vitreuse (Tg) différant d'au moins 10 °C ; ladite polymérisation, dans au moins une phase, étant effectuée en présence de 0,01 à 1,0 % %, en poids sur la base du poids sec du polymère de ladite phase, d'hydroperoxyde de t-alkyle, de peroxyde de t-alkyle, ou de perester de t-alkyle où le groupe t-alkyle comprend au moins 5 atomes de carbone.

6. Procédé selon la revendication 5, dans lequel ladite polymérisation, dans au moins une phase, est effectuée en présence de 0,01 à 1,0 % %, en poids sur la base du poids sec du polymère de ladite phase, d'hydroperoxyde de t-amyle.

7. Procédé pour fournir un substrat revêtu, comprenant les étapes consistant :
à former la composition aqueuse de revêtement selon la revendication 4 ;
à appliquer ladite composition aqueuse de revêtement audit substrat ; et
à sécher, ou à laisser sécher, ladite composition aqueuse.
